# EUROPEAN PATENT APPLICATION

(11) **EP 4 534 246 A1**
(43) Date of publication of application: **09.04.2025**
(21) Application number: 22944791.7
(22) Date of filing: 31.05.2022
(51) Int. Cl.: B25B 21/00, B25B 13/06

(54) **TOOL**

(71) Applicant: Kyoto Tool Co., Ltd., Kyoto-shi Kyoto 612-8393 (JP)
(72) Inventor: ASAHINA, Kensuke, Kuse-gun, Kyoto 613-0034 (JP); TANIGUCHI, Kazuki, Kuse-gun, Kyoto 613-0034 (JP); KIM, Youngdo, Shanghai 200030 (CN)
(74) Representative: Müller Hoffmann & Partner
(86) International application number: PCT/JP2022/022045
(87) International publication number: WO 2023/233502

(57) **Abstract**

In a tool that is at least partially made of metal, in order to make it possible to secure communication stability and, in addition, to communicate with a reader irrespective of orientation or posture of the tool while keeping a compact size, the tool 100 includes a shaft body 10 made of metal at least partially, and have a groove (G) provided continuously or intermittently along a circumferential direction on an outer peripheral surface of the shaft body 10, and the tool 100 has a non-metallic spacer 20 provided in the groove (G), an electronic tag 30 mounted on the shaft body 10 through the spacer 20 and provided along the circumferential direction either continuously or intermittently, and a jacket member 40 covering the electronic tag 30 from the outside.

## Description

### Technical field

This invention relates to a tool.

### Background technology

For example, in an aircraft maintenance scene or the like, since a loss of a tool such as a socket is directly linked to safety, thorough tool management has been carried out.

As shown in the Patent Document 1, conventional tool management is to mount an electronic tag on a tool and to use wireless communication between the electronic tag and a reader.

However, when the electronic tag is mounted on a metal tool, a part of radio waves transmitted from the electronic tag are reflected by the tool. This causes a problem that the radio waves are canceled out each other and weaken and communication stability is impaired.

In addition, another problem is that depending on a shape of the electronic tag and a mounting location of the electronic tag, the direction from which the radio waves are transmitted may be narrowed to a certain range. As a result of this, depending on an orientation and a posture of the tool, there is a problem that communication between the tool and the reader becomes unable.

One possible solution would be to make the electronic tag go around the entire circumference of the tool in order to transmit the radio waves in all directions, however, this would cause other problem such that the tool becomes bulky.

### Prior art documents

### Patent documents

Patent document 1: Japanese Unexamined Patent Application Publication No. 2007-333030

### Summary of the invention

### Problem to be solved by the invention

The present claimed invention is made to solve the above-mentioned problems at once, and a main object of this invention is to make it possible to communicate with a reader regardless of an orientation or a posture of a tool while maintaining a compact size and stability of communication in a tool that is at least partially made of metal.

### Means to solvine the problem

More specifically, a tool in accordance with this invention is a tool that includes a shaft body made of metal at least partially, wherein a groove is provided continuously or intermittently along a circumferential direction of an outer peripheral surface on the shaft body, and is characterized by comprising a non-metallic spacer provided in the groove, an electronic tag mounted on the shaft body through the spacer and provided continuously or intermittently along the circumferential direction, and a jacket member that covers the electronic tag from an outside.

In accordance with the tool having this configuration, since the non-metallic spacer is provided in the groove provided in the metallic shaft body and the electronic tag is mounted on the shaft body through this spacer, it is possible to suppress the reflection of radio waves transmitted from the electronic tag by the shaft body, resulting in securing stable communication.

In addition, since the spacer and the electronic tag are not simply mounted on the shaft body but the groove is provided in the shaft body, it is possible to keep the tool compact, and since the electronic tag is provided continuously or intermittently along the circumferential direction of the shaft body, it is possible to communicate with the reader regardless of the orientation or the posture of the tool.

It is preferable that the groove is provided continuously around the entire circumference on the outer peripheral surface of the shaft body.

In accordance with this configuration, it is possible to transmit the radio waves from the electronic tag in all directions, resulting in making communication between the electronic tag and the reader more securely.

It is preferable that a pair of inward-facing surfaces as being surfaces that sandwich a bottom surface of the groove from both sides in the axial direction function as a regulating surface that restricts a movement of the jacket member along the axial direction.

In accordance with this configuration, it is possible to prevent the mounted jacket member from falling off.

In order to firmly mount the spacer and the electronic tag on the shaft body, it is conceivable that the jacket member is insert-molded from the outside of the spacer and the electronic tag.

However, in accordance with this method, there is a risk that the electronic tag may be damaged by the heat.

Therefore, it is preferable that the jacket member comprises a plurality of split elements divided in the circumferential direction, and the split elements that are adjacent to each other are connected.

In accordance with this configuration, it is possible to firmly attach the spacer and electronic tag to the shaft body and to reduce the heat effect greatly compared with the insert molding by connecting the divided elements each other.

As a more concrete configuration represented is the tool wherein each of circumferential end surfaces of the adjacent split elements faces each other, a concave portion is provided in the circumferential end surface of one of the split elements, a convex portion that enters the concave portion is provided in the circumferential end surface of the other split element, and the concave portion and the convex portion are connected.

It is preferable that each of the plurality of the split elements has the same shape.

In accordance with this configuration, it is possible to reduce a manufacturing cost.

It is preferable that the spacer has a dent portion that is caved radially inward.

In accordance with this configuration, it is possible to keep the tool compact by mounting the IC chip that constitutes the electronic tag on the dent portion.

It is preferable that a chamfered portion is provided at a position, which corresponds to the dent portion, on the outer peripheral surface of the shaft body.

In accordance with this configuration, it is possible to secure a thickness of the spacer as much as a chambered amount so that the dent portion can be provided without difficulty.

As a concrete configuration of the electronic tag represented is the electronic tag that comprises an inner antenna located radially inward, an outer antenna located radially outward from the inner antenna, an insulating sheet interposed between the inner antenna and the outer antenna, and an IC chip provided on the inner antenna or the outer antenna.

It is preferable that the spacer is tubular and has a cutout formed from one end in an axial direction to the other end in the axial direction.

In accordance with this configuration, it is possible to insert the spacer fittingly into the groove of the shaft body while expanding the cutout, resulting in high manufacturability.

As another embodiment to solve the problem of thermal effects caused by the above-mentioned insert molding represented is by the tool wherein each of the shaft body, the spacer, the electronic tag and the jacket member overlaps each other and the tool has an insertion hole into which a common fastener is inserted.

In accordance with this configuration, the shaft, spacer, electronic tag and jacket member can be fastened together using the fastener, and the spacer and electronic tag can be firmly attached to the shaft body while eliminating the heat effect on the electronic tag.

In addition, as a further different embodiment represented is that the spacer and the jacket member are press-fitted into the groove of the shaft body.

In accordance with this configuration, it is possible to firmly mount the spacer and the electronic tag to the shaft body while eliminating the effect of heat on the electronic tag.

### Effect of the Invention

In accordance with the present claimed invention having the above-mentioned configuration, it is possible to ensure communication stability in the tool that is at least partially made of metal, and it is also possible to communicate with the reader regardless of the orientation or the posture of the tool while maintaining a compact size.

### Brief description of the drawings

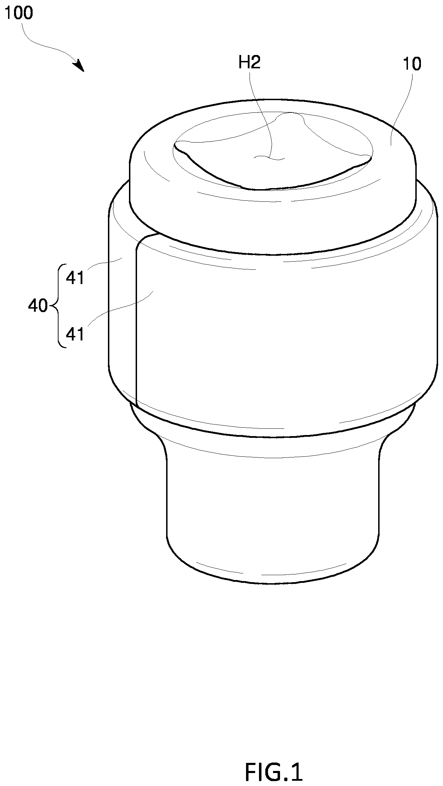

[Fig. 1] A perspective view schematically showing a configuration of a tool in one embodiment of the present claimed invention.
[Fig. 2] A cross-sectional view schematically showing the configuration of the tool in the same embodiment.
[Fig. 3] An exploded perspective view schematically showing the configuration of the tool in the same embodiment.
[Fig. 4] A perspective view schematically showing a configuration of a spacer in the same embodiment.
[Fig. 5] A perspective view schematically showing a jacket member in the same embodiment.
[Fig.6] A perspective view schematically showing a configuration of a spacer of another embodiment.
[Fig. 7] A perspective view schematically showing a configuration of a spacer of another embodiment.
[Fig. 8] A perspective view schematically showing a configuration of a spacer of another embodiment.
[Fig. 9] A perspective view schematically showing a configuration of a spacer of another embodiment.

### Best mode for embodying the invention

A tool in accordance with this invention will be explained with reference to drawings.

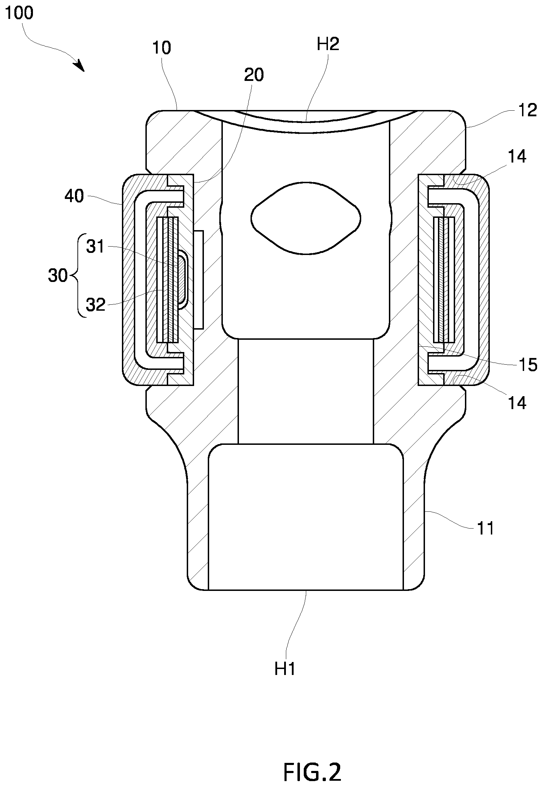

The tool 100 in accordance with this embodiment is used at maintenance sites for aircraft, vehicles, railway vehicles or ships, and in this embodiment, as shown in Fig, 1 and Fig. 2, the tool is a socket 100 wherein formed are a fitting hole H1 into which a fastener fits and a square insertion hole H2 into which a square drive provided on a head of a handle is inserted.

The socket 100 includes a shaft body 10 made of metal in at least a portion of the socket 100, and the shaft body 10 is a tubular shape entirely made of metal wherein the fitting hole H1 and the square insertion hole H2 are formed.

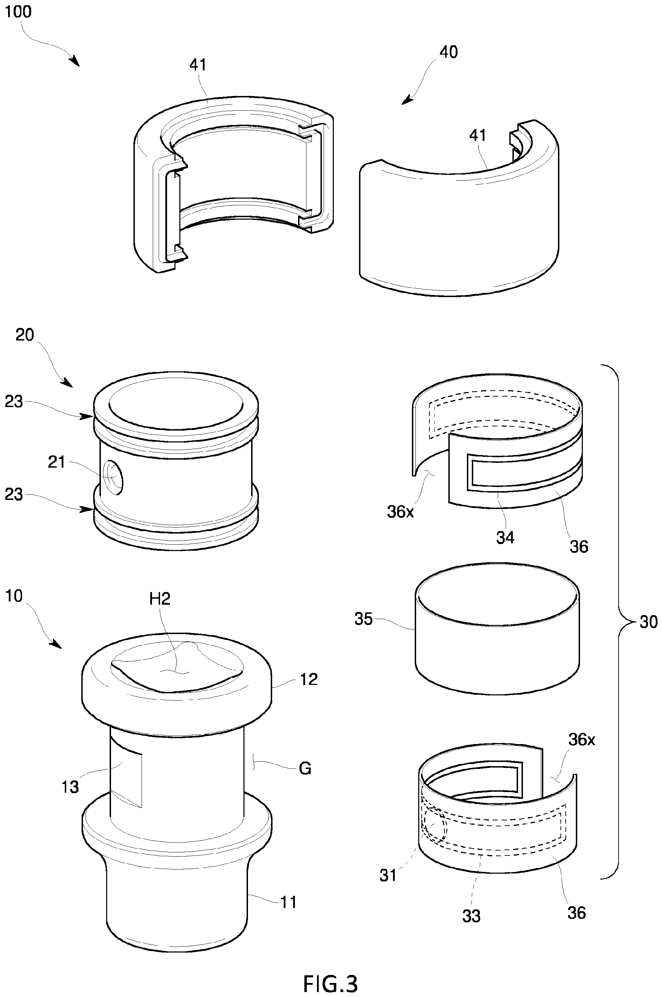

As shown in Fig. 3, a groove (G) is provided on an outer peripheral surface of the shaft body 10, and the groove (G) in this embodiment is provided continuously around the entire circumference on the outer peripheral surface of the shaft body 10.

To be explained more concretely, the shaft body 10 of this embodiment is so configured that a diameter of a square drive side element 12 where the square drive angle H2 is formed is larger than a diameter of a fastener side element 11 where the hitting hole H1 is formed, and the groove (G) is formed in the square drive side element 12.

As shown in Fig. 2 and Fig. 3, the socket 100 of this embodiment has a spacer 20 provided in the groove (G), an electronic tag 30 mounted on the shaft body 10 through the spacer 20, and a jacket member 40 covering the electronic tag 30 from the outside.

As shown in Fig. 2, the spacer 20 is used to secure a distance between an outer surface of the shaft body 10 and the electronic tag 30, to be described later, in other words, the spacer 20 is a non-metallic material that electrically separates (makes non-connected) the shaft body 10 and the electronic tag 30.

The spacer 20 is made of, for example, resin in a tubular shape, and an inner diameter of the spacer 20 is equal to or slightly smaller than an outer diameter of the above-mentioned groove (G).

In accordance with this configuration, the spacer 20 is tightly mounted on the groove (G) by passing the spacer 20 through the fastener side element 11 or the square drive side element 12 of the shaft body 10 while expanding the spacer 20.

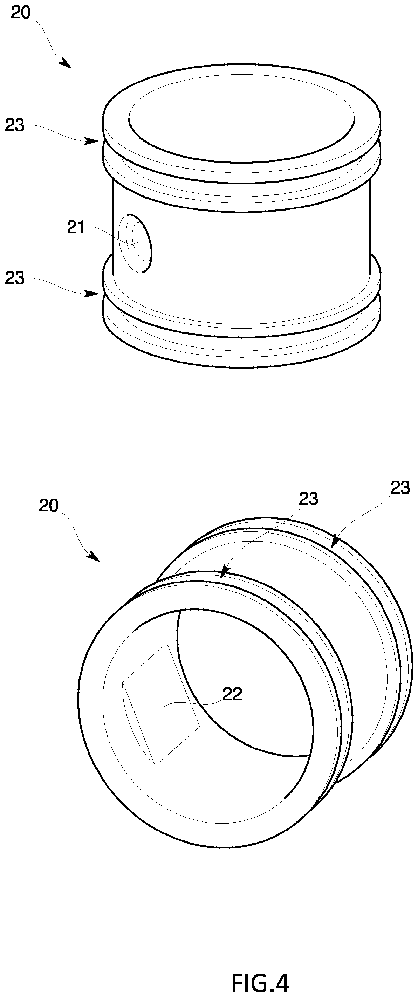

As shown in an upper part of Fig. 4, a portion of an outer peripheral surface of the spacer 20 has a recessed portion 21 that is caved radially inward, and a flat portion 22 that locates more inward in the radial direction than other portions, as shown in a lower part of Fig. 4, is provided on a back side of the recess portion 21, namely, on an inner circumferential surface of the spacer 20.

In accordance with this configuration, as shown in Fig. 3, a chamfer portion 13 is provided on the outer peripheral surface of the above-mentioned shaft body 10 at a position corresponding to the recessed portion 21, in other words, at a position facing the flat portion 22, and the flat portion 22 contacts the chamfered portion 13.

In addition, as shown in Fig. 3 and Fig. 4, a circular groove 23 is provided along the circumference of the spacer 20 respectively at each of one end portion in an axial direction and the other end portion in the axial direction of the outer peripheral surface of the spacer 20.

The electronic tag 30, as shown in Fig. 2, is a device that communicates wirelessly with a reader (not shown in drawings) and stores various types of information that can be read by the reader, and the electronic tag 30 has at least an IC chip 31 and an antenna portion 32 on which the IC chip 31 is provided.

As shown in Fig. 3, the electronic tag 30 of this embodiment is so configured that the antenna portion 32 comprises an inner antenna 33 that locates on an inner side in a radial direction and an outer antenna 34 that locates on an outer side of the inner antenna 33 in the radial direction, and an insulating sheet 35 is interposed between the inner antenna 33 and the outer antenna 34.

In this embodiment, the IC chip 31 is connected to the inner antenna 33 and is arranged to fit into the above-mentioned recessed portion 21. The IC chip 31 may be connected to the outer antenna 34 rather than the inner antenna 33.

The inner antenna 33 and the outer antenna 34 in this embodiment are formed on an antenna substrate 36 such as a flexible substrate.

To be explained more concretely, the antenna substrate 36 has a C-shaped cross-sectional shape that is cut out of a portion of a circle, which is perpendicular to the axial direction of the socket 100.

**In** this embodiment, a cutout portion 36x of the antenna substrate 36 on which the inner antenna 33 is formed and the cutout portion 36x of the antenna substrate 36 on which the outer antenna 34 is formed are arranged to face opposite to each other.

The inner antenna 33 and the outer antenna 34 use, for example, photoresist to form a closed loop. A formation method for the inner antenna 33 and the outer antenna 34 is not necessarily limited to photoresist, and various formation methods such as cutting processing and laser processing may be used.

The inner antenna 33 and the outer antenna 34 of this embodiment are formed from four side portions surrounding a rectangular area, and the rectangular area surrounded by the inner antenna 33 and the rectangular area surrounded by the outer antenna 34 are arranged to face opposite to each other.

However, the shapes of the inner antenna 33 and the outer antenna 34 are not limited to this, and for example, one or both of the inner antenna 33 and the outer antenna 34 may be sheet-shaped, for example, in a rectangular form. In addition, the shapes of the inner antenna 33 and the outer antenna 34 do not necessarily have to be the same each other.

Furthermore, the shapes and the arrangements of the inner antenna 33 and the outer antenna 34, and the shape and the arrangement of the antenna substrate 36, are not limited to this, and may be changed as appropriate.

The jacket member 40 protects the electronic tag 30, as shown in Fig. 2, and is, for example, a tubular shape made of hard resin.

The jacket member 40 of this embodiment has a larger outer diameter than that of the shaft body 10, in other words, the outer peripheral surface of the jacket member 40 locates outside the outer peripheral surface of the shaft body 10 in the radial direction. However, the outer peripheral surface of the jacket member 40 may be located inside the groove (G) of the shaft body 10.

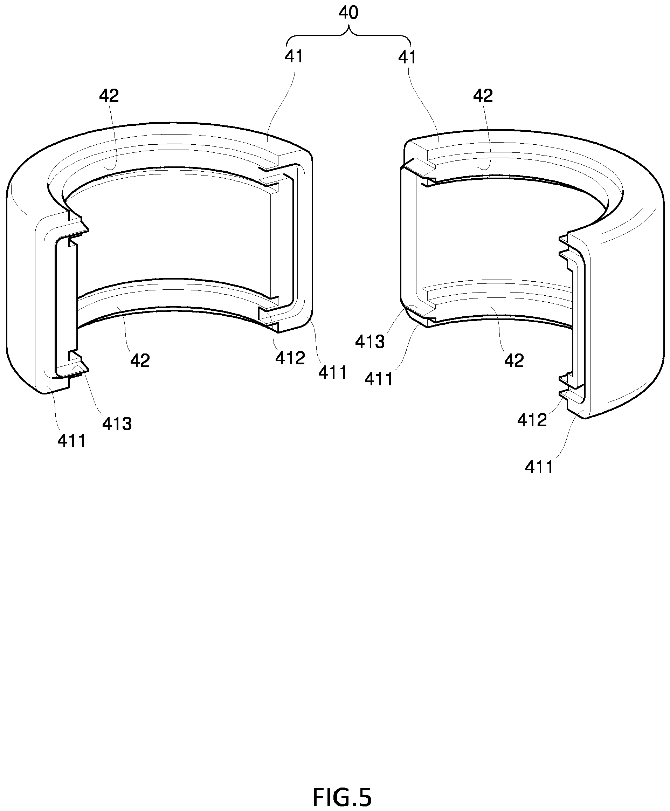

In this embodiment, as shown in Fig. 5, the jacket member 40 consists of a plurality of split elements 41 each of which is divided along a circumferential direction.

To be explained more concretely, the jacket member 40 comprises a pair of split elements 41, and each of the split elements 41 has a shape that is half of a cylinder. In other words, the split elements 41 of this embodiment is semicircular in a cross-sectional shape orthogonal to an axial direction.

In this embodiment, each of the split elements 41 has the same shape, resulting in reduction in a manufacturing cost.

The split elements 41 are connected inseparably, and concretely the split elements 41 are ultrasonically welded to each other. Namely, since the split elements 41 are given ultrasonic vibrations, the parts that come into contact with each other (hereinafter referred to as contact points) rub against each other, friction heat is generated, and this friction heat melts the contact points and welds the split elements 41 together.

Furthermore, even if the jacket member 40 comprises three or more split elements 41, the split elements 41 that are adjacent to each other may be welded together using ultrasonic welding.

To be explained in more detail, each pair of the split elements 41 have a pair of end surfaces 411 in the circumferential direction respectively, as shown in Fig. 5, and the end surfaces 411 in the circumferential direction of one split element 41 and the end surfaces 411 in the circumferential direction of the other split element 41 are welded together in a state of facing each other.

A concave portion 412 is provided on the end surface 411 in the circumferential direction of one of the split elements 41, and a convex portion 413 is provided on the end surface 411 in the circumferential direction of the other split element 41. The concave portion 412 and the convex portion 413 are ultrasonically welded at a welding point in a state wherein the convex portion 413 is inserted into the concave portion 412.

However, the split elements 41 do not necessarily have to be connected by ultrasonic welding. For example, the split elements 41 may be glued together using an adhesive, welded together, fastened together using a resin screw or other fastener, or engaged by fitting the convex portion 413 into the concave portion 412.

In this embodiment, as described above, the pair of the split elements 41 have the same shape, and if focusing on one of the split elements 41, the concave portion 412 is provided on one of the circumferential end surfaces 411, and the convex portion 413 is provided on the other circumferential end surface 411.

A circular projection 42 formed along the circumferential direction is provided on the inner surface of each of the split elements 41 at one end portion in the axial direction and the other end portion in the axial direction respectively, and the jacket member 40 is mounted on the groove (G) of the shaft body 10 through the spacer 20 by fittingly inserting the circular projections 42 into the circular grooves 23 provided in the above-mentioned spacer 20.

In a state wherein the jacket member 40 is mounted on the groove (G) of the shaft body 10, as shown in Fig. 2, the pair of the inward-facing surfaces 14, which are the surfaces that sandwich the bottom surface 15 of the groove (G) from both sides in the axial direction, function as a regulating surface that restricts a movement along the axial direction of the jacket member 40.

To be explained more concretely, the groove (G) of the shaft body 10 comprises a bottom surface 15, which is a surface along the axial direction of the shaft body 10, and a pair of inward-facing surfaces 14, which are surfaces that sandwich the bottom surface 15 from both sides in the axial direction, and the inward-facing surfaces 14 become the above-mentioned regulating surface.

In accordance with the socket 100 having the above-mentioned configuration, since the non-metallic spacer 20 is provided in the groove (G) provided in the metallic shaft body 10, and the electronic tag 30 is mounted through the spacer 20, it is possible to suppress the reflection of radio waves transmitted from the electronic tag 30 by the shaft body 10, resulting in ensuring stability in communication.

Furthermore, since rather than simply providing the spacer 20 and electronic tag 30 in the shaft body 10 and the groove (G) is provided in the shaft body 10, it is possible to keep the socket 100 compact. In addition, since the electronic tag 30 is provided continuously or intermittently along the circumferential direction, it is possible to communicate with the reader regardless of the orientation or the posture of the socket 100.

In addition, since the groove (G) is provided continuously around the entire circumference of the outer surface of the shaft body 10, it is possible to transmit radio waves in all directions from the electronic tag 30 so that communication between the electronic tag 30 and the reader can be made more reliable.

Furthermore, since the inward-facing surfaces 14 that form the groove (G) function as the regulating surface that restricts a movement of the jacket member 40 along the axial direction, it is possible to prevent the mounted jacket member 40 from falling out.

In addition, since the jacket member 40 comprises a plurality of the split elements 41 that are divided in the circumferential direction and the split elements 41 that are adjacent to each other are ultrasonically welded, it is possible both to firmly mount the spacer 20 and the electronic tag 30 on the shaft body 10 and to greatly reduce the heat effect on the electronic tag 30.

In addition, since the spacer 20 has the concave portion 21 that is recessed in the radial direction, and the IC chip 31 that constitutes the electronic tag 30 fits into the concave poriton21, it is possible to keep the socket 100 compact.

Furthermore, since the chamfered portion 13 is provided on the outer peripheral surface of the shaft body 10 at the position corresponding to the concave portion 21, it is possible to secure the thickness of the spacer 20 by an amount equivalent to the chamfered amount and to provide the concave portion 21 without difficulty.

The present invention is not limited to the above-mentioned embodiment.

For example, the groove (G) formed in the shaft body 10 is continuously formed over the entire circumferential direction in the above-mentioned embodiment, however, it may be continuously formed leaving a portion of the circumferential direction, or it may be formed intermittently over the circumferential direction.

Accompanied by the shape of the groove (G), the spacer 20, the electronic tag 30, and the jacket member 40 may also be formed continuously while leaving a portion of the circumferential direction or may be formed intermittently over the circumferential direction.

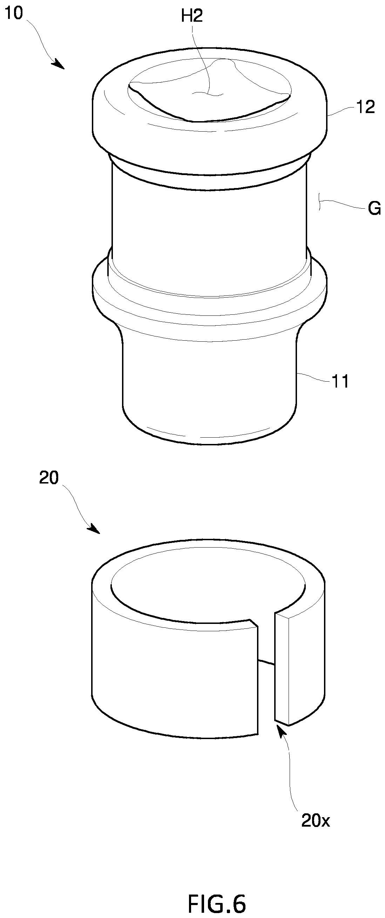

In addition, although the spacer 20 is cylindrical in the above-mentioned embodiment, however, it may be tubular and have a cutout 20x formed from one end in the axial direction to the other end in the axial direction, as shown in Fig. 6.

In accordance with this configuration, the spacer 20 can be inserted into the groove (G) of the shaft body 10 while expanding the cutout 20x, resulting in good manufacturability.

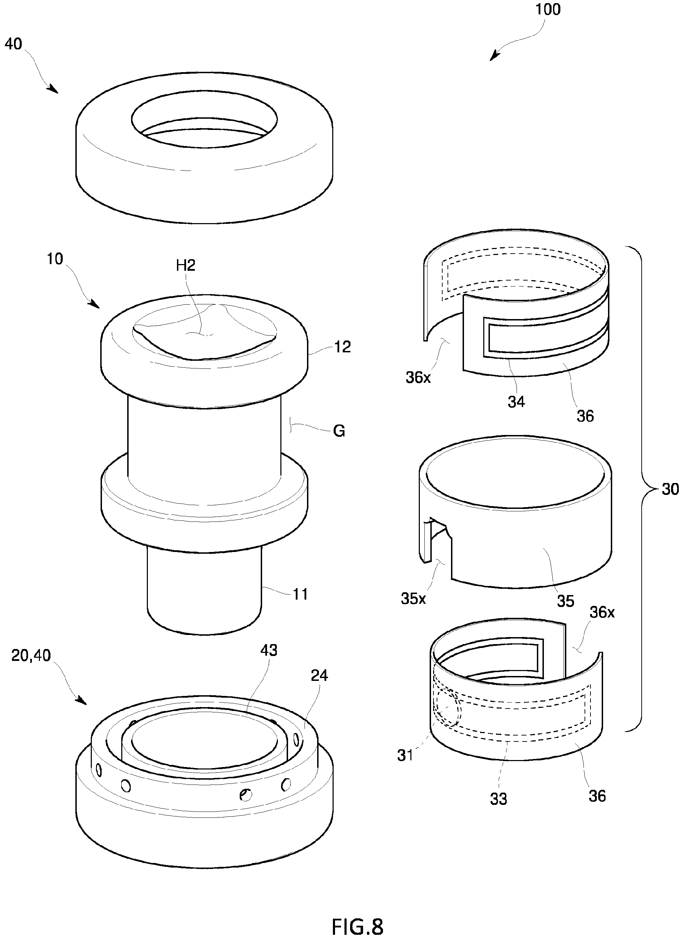

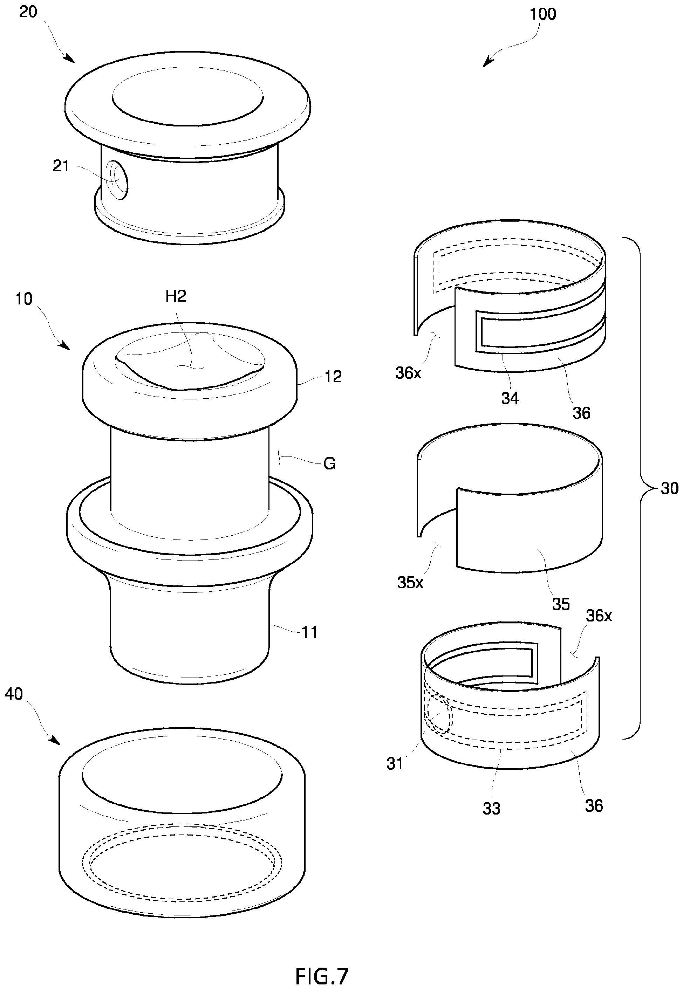

In addition, the jacket member 40 in the above-mentioned embodiment is made by ultrasonically welding the split elements 41, however, the jacket member 40 may be cylindrical in shape and, similar to the spacer 20, the jacket member 40 may be pressed into the groove (G) of the shaft body 10 by being expanded and passed through the fastener side element 11 or the square drive side element 12 of the shaft body 10, as shown in Fig. 7 and Fig. 8.

In addition, the insulating sheet 35 that constitutes the electronic tag 30 may be configured so that the cross-section that is perpendicular to the axial direction forms a C-shape, as shown in Fig. 7, and the IC chip 31 may be arranged in a cutout portion 35x.

In addition, as shown in Fig. 8, a part of the spacer 20 may be used also as a part of the jacket member 40. Concretely, the spacer 20 has a double-cylinder structure with an inner cylinder 24 functioning as the spacer 20 and an outer cylinder 43 functioning as the jacket member 40. The outer cylinder 43 functions as the jacket member 40 by housing the electronic tag 30 between the inner cylinder 24 and the outer cylinder 43.

In addition, the cutout portion 35x formed in the insulating sheet 35 may be formed only halfway in the axial direction, as shown in Fig. 8, rather than being formed over the entire length in the entire axial direction.

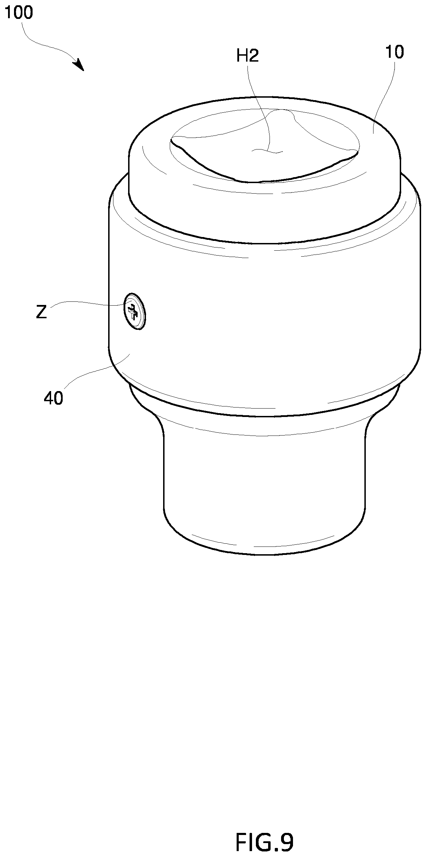

Furthermore, the jacket member 40 may be mounted on the shaft body 10 through a fastener (Z) such as a screw or the like, as shown in Fig. 9.

Concretely, each of the shaft body 10, the spacer 20, the electronic tag 30, and the jacket member 40 overlaps each other and has an insertion hole (not shown in drawings) into which the common fastener (Z) is inserted.

In addition, the jacket member 40 may be insert-molded to surround the electronic tag 30.

Furthermore, the tool in accordance with the present claimed invention is not limited to the socket 100 described in the above-mentioned embodiment, however, it may be any tool that includes a shaft body 10 made of metal at least in its part, and can include, for example, a ratchet handle, pliers, a screwdriver, a spinner handle, an extension bar, and pincers.

It goes without saying that the present claimed invention is not limited to the above-mentioned embodiments, and various modifications are possible without departing from a spirit of this invention.

### Explanation of Symbols

- 100: tool
- 10: shaft body
- G: groove
- 11: fastener side element
- 12: square drive side element
- 13: chamfered portion
- 14: inward-facing surface
- 15: bottom surface
- 20: spacer
- 30: electronic tag
- 40: jacket member
- 41: split element
- 411: circumferential end surface
- 412: concave portion
- 413: convex portion

## Claims

1. A tool that includes a shaft body made of metal at least partially, wherein
a groove is provided continuously or intermittently along a circumferential direction on an outer peripheral surface of the shaft body, and comprising
a non-metallic spacer provided in the groove,
an electronic tag mounted on the shaft body through the spacer and provided continuously or intermittently along the circumferential direction, and
a jacket member that covers the electronic tag from an outside.

2. The tool described in claim 1, wherein
the groove is provided continuously around the entire circumference on the outer peripheral surface of the shaft body.

3. The tool described in claim 1, wherein
a pair of inward-facing surfaces as being surfaces that sandwich a bottom surface of the groove from both sides in the axial direction function as a regulating surface that restricts a movement of the jacket member along the axial direction.

4. The tool described in claim 1, wherein
the jacket member comprises a plurality of split elements divided in the circumferential direction, and the split elements that are adjacent to each other are connected.

5. The tool described in claim 4, wherein
each of circumferential end surfaces of the split elements that are adjacent to each other faces each other,
a concave portion is provided in the circumferential end surface of one of the split elements, a convex portion that enters the concave portion is provided in the circumferential end surface of the other split element, and the concave portion and the convex portion are connected.

6. The tool described in claim 4, wherein
each of the plurality of the split elements has the same shape.

7. The tool described in claim 1, wherein
the spacer has a dent portion that is caved radially inward.

8. The tool described in claim 7, wherein
a chamfered portion is provided at a position, which corresponds to the dent portion, on the outer peripheral surface of the shaft body.

9. The tool described in claim 1, wherein
the electronic tag comprises
an inner antenna located radially inward,
an outer antenna located radially outward from the inner antenna,
an insulating sheet interposed between the inner antenna and the outer antenna, and
an IC chip provided on the inner antenna or the outer antenna.

10. The tool described in claim 1, wherein
the spacer is tubular and has a cutout formed from one end in an axial direction to the other end in the axial direction.

11. The tool described in claim 1, wherein
each of the shaft body, the spacer, the electronic tag and the jacket member overlaps each other and has an insertion hole into which a common fastener is inserted.

12. The tool described in claim 1, wherein
the spacer and the jacket member are press-fitted into the groove of the shaft body.
